## Europäisches Patentamt
## European Patent Office
## Office européen des brevets

(19)

(11) Veröffentlichungsnummer: **0 068 127**
**B1**

(12) # EUROPÄISCHE PATENTSCHRIFT

(45) Veröffentlichungstag der Patentschrift:
**26.02.86**

(51) Int. Cl.⁴: **F 16 K 17/164**

(21) Anmeldenummer: **82104176.1**

(22) Anmeldetag: **13.05.82**

(54) **Steuereinrichtung für ein druckmittelgesteuertes, in einer Versorgungsleitung angeordnetes Ventil.**

(30) Priorität: **29.06.81 DE 3125479**

(43) Veröffentlichungstag der Anmeldung:
**05.01.83 Patentblatt 83/1**

(45) Bekanntmachung des Hinweises auf die Patenterteilung:
**26.02.86 Patentblatt 86/9**

(84) Benannte Vertragsstaaten:
**AT BE CH DE FR GB IT LI NL SE**

(56) Entgegenhaltungen:
**GB - A - 1 595 365**
**US - A - 2 667 896**
**US - A - 3 892 258**

(73) Patentinhaber: **WABCO Westinghouse
S⋅⋅ıerungstechnik GmbH & Co.,
B⋅⋅ıweg 13 Postfach 91 12 70, D-3000 Hannover 91 (DE)**

(72) Erfinder: **Voigt, Hermann, Wiesenstrasse 47,
D-7053 Kernen (DE)**
Erfinder: **Brett, Norbert, Forchenwaldstrasse 5,
D-7057 Winnenden-Schelmen (DE)**

(74) Vertreter: **Schrödter, Manfred, WABCO Westinghouse
Fahrzeugbremsen GmbH Am Lindener
Hafen 21 Postfach 91 12 80, D-3000 Hannover 91 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft eine Steuereinrichtung für ein druckmittelgesteuertes, in einer Versorgungsleitung angeordnetes Ventil, gemäß dem Oberbegriff des Patentanspruchs 1.

Bei druckluftbetriebenen Anlagen, wie z. B. Farbspritzanlagen, die mit einem relativ hohen Versorgungsdruck arbeiten und deren Steuereinrichtung für ein druckmittelbetätigtes, in einer Versorgungsleitung angeordnetes Ventil mit einem relativ niedrigen Steuerdruck betrieben wird, kann es passieren, daß bei einem Defekt in dem Ventil (Membranriß) das mit hohem Druck beaufschlagte Medium der Versorgungsleitung in die Steuerleitung gedrückt wird.

Ein derartiger Defekt hat insbesondere dann schwerwiegende Folgen, wenn es sich bei dem Medium in der Vorsorgungsleitung um Farbe oder aggressive Stoffe handelt. Wenn der Versorgungsdruck höher ist als der Steuerdruck, würde das in der Versorgungsleitung geführte Medium über die Steuerleitung in die Steuerdruckquelle gelangen und diese unbrauchbar machen.

Der Erfindung liegt deshalb die Aufgabe zugrunde, eine Einrichtung der eingangs genannten Art zu schaffen, die ein Eindringen von gasförmigen oder flüssigen Stoffen aus der Versorgungsleitung in die Steuerleitung sowie die mit dieser verbundene Steuerdruckquelle verhindert.

Diese Aufgabe wird mit der im Patentanspruch 1 angegebenen Erfindung gelöst.

Vorteilhafte Weiterbildungen und Ausgestaltungen der Erfindung werden in den Unteransprüchen angegeben.

Die erfindungsgemäße Einrichtung bietet den Vorteil, daß sie auch nachträglich in jede beliebige druckmittelbetriebene Anlage eingebaut werden kann. Gemäß einer vorteilhaften Weiterbildung der Erfindung kann die Einrichtung mit einer mechanischen oder elektrischen Anzeigeeinrichtung ausgestattet werden, die bereits geringe schadhafte Veränderungen in der druckmittelbetriebenen Anlage anzeigt.

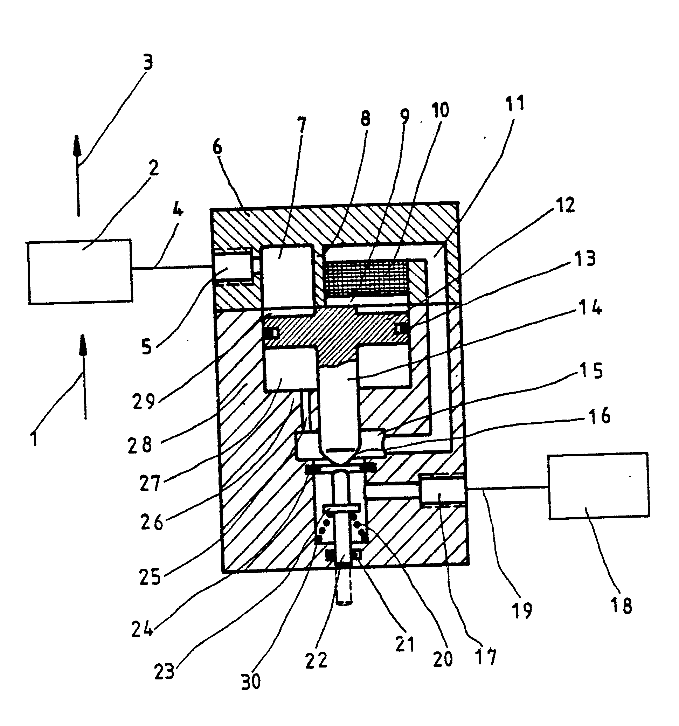

Anhand der Zeichnung wird ein Ausführungsbeispiel der Erfindung nachstehend näher erläutert.

In der Zeichnung ist eine Steuereinrichtung für ein druckmittelgesteuertes, in einer Versorgungsleitung 1, 3 angeordnetes Ventil 2 dargestellt, wobei die Einrichtung mit ihrem Eingang 17 und ihrem Ausgang 5 in eine Steuerleitung geschaltet ist, welche in diesem Ausführungsbeispiel einen in Blockform dargestellten, elektronisch gesteuerten als Steuerdruckquelle dienenden Farbdruckgeber 18 mit einem Farbdrucksteuerventil 2 verbindet.

In einem aus zwei Gehäuseteilen 6 und 28 bestehenden Gehäuse 6, 28 ist eine erste Druckmittelkammer 9, 7 und eine zweite Druckmittelkammer 27 vorgesehen. Die beiden Druckmittelkammern 9, 7 und 27 sind durch einen mit einem Dichtring 13 versehenen Kolben 12 voneinander getrennt. Die beiden Druckmittelkammern 9, 7 und 27 bilden zusammen mit dem Kolben 12 eine Differenzdruck-Meßeinrichtung. Der Kolben 12 weist einen mit einem konischen Ansatz 16 versehenen, als Ventilverschlußkörper 14 dienenden Fortsatz auf, der in einer in einem Gehäusesteg 26 vorgesehenen Bohrung geführt wird. Durch den Gehäusesteg 26 ist die zweite Druckmittelkammer 27 von einer Ventilauslaßkammer 15 getrennt. Ein als Ventilsitz 24 ausgebildeter Dichtring ist in der Wandung einer weiteren, als Ventileinlaßkammer 20 dienenden Kammer eingearbeitet. Der Ventilsitz 24 bildet mit dem Ventilverschlußkörper 14, 16 ein Absperrventil 14, 16, 24, mittels welchem die Ventileinlaßkammer 20 gegen die Ventilauslaßkammer 15 absperrbar ist. Die Ventilauslaßkammer 15 steht über einen ersten Kanal 11 mit der ersten Druckmittelkammer 9, 7 in Verbindung. Über einen zweiten, im Gehäusesteg 26 vorgesehenen Kanal 25 ist die Ventilauslaßkammer 15 mit der zweiten Druckmittelkammer 27 verbunden. Zwischen der Wandung des Gehäuseteiles 6 und einem die erste Druckmittelkammer 9, 7 unterteilenden Steg 8 ist ein als Drossel 10 dienender Filter angeordnet. Die erste Druckmittelkammer 7, 9 steht über einen Druckmittelausgang 5 und eine Steuerleitung 4 mit dem Steuereingang eines Farbdrucksteuerventils 2 in Verbindung. Ein weiterer Eingang des Farbdrucksteuerventils 2 ist an eine Versorgungsleitung 1 angeschlossen. Der Ausgang des Farbdrucksteuerventils 2 ist über eine Leitung 3 mit hier nicht gezeigten Spritzdüsen verbunden. Die Ventileinlaßkammer 20 steht über eine Steuerleitung 19 mit einer als Farbdruckgeber dienenden Steuerdruckquelle 18 in Verbindung. Der elektronisch gesteuerte Farbdruckgeber bestimmt die Höhe des auf das Farbdrucksteuerventil 2 zu gebenden Steuerdruckes. In der Ventileinlaßkammer 20 ist ein mit einem Anschlag 23 versehener Schaltstift 22 koaxial zum Ventilverschlußkörper 14, 16 angeordnet. Der Schaltstift 22 wird in einer Bohrung im unteren Gehäuseteil 28 geführt. Ein in der Wandung der Bohrung befestigtes Dichtelement (21) verhindert ein Austreten der Steuerluft aus der Ventileinlaßkammer 20. Mittels einer Feder 30 wird der Schaltstift 22 in seiner Ruhestellung gehalten.

Der Kolben 12 ist so ausgebildet, daß in der Offenstellung des Absperrventils 14, 16, 24 seine die erste Druckmittelkammer 9, 7 begrenzende Wirkfläche genauso groß ist wie seine die zweite Druckmittelkammer 27 begrenzende Wirkfläche zuzüglich der Stirnfläche des als Ventilverschlußkörper 14, 16 dienenden Fortsatzes des Kolbens 12.

Ist jedoch das Absperrventil 14, 16, 24 geschlossen, so ist die der zweiten Druckmittelkammer 27 zugewandte Wirkfläche des Kolbens 12 um den Betrag der Stirnfläche des Ventilverschlußkörpers 14, 16 verringert, so daß das möglicherweise über den Kanal 11 und den Kanal 25 in die zweite Druckmittelkammer 27 gelangende Medium höheren Druckes das Absperrventil 14, 16, 24 nicht in die Offenstellung bringen kann.

Es ist selbstverständlich auch möglich, den Kolben 12 der Differenzdruck-Meßeinrichtung so auszubilden, daß seine beiden die Druckmittelkammern 9, 7 und 27 begrenzenden Wirkflächen sowohl bie geöffnetem als auch bei geschlossenem Absperrventil gleich groß sind.

In einem solchen Fall muß die zweite Druckmittelkammer 27 jedoch gegen den Kanal 11 und somit auch gegen die erste Druckmittelkammer 9, 7 abgeschlossen sein. Die zweite Druckmittelkammer 27 wird über eine vom Druckmitteleingang 17 unabhängige Leitung direkt mit der Steuerdruckquelle 18 verbunden, so daß die die zweite Druckmittelkammer 27 begrenzende Wirkfläche den Kolben 12 ausschließlich vom Steuerdruck beaufschlagt wird.

Das die Steuerdruckquelle 18 mit dem Farbdrucksteuerventil 2 verbindende Absperrventil wird bei einer solchen Ausführung der Einrichtung mittels eines am Kolben 12 angeordneten Stößels, welcher druckdicht aus der zweiten Druckmittelkammer 27 herausgeführt wird, betätigt.

Es ist natürlich auch denkbar, in der zweiten Druckmittelkammer 27 und am Kolben 12 elektrische Kontakte anzuordnen, mittels welcher bei einer Verschiebebewegung des Kolbens 12 in Richtung auf die zweite Druckmittelkammer 27 zu ein elektrisch betätigbares Absperrventil geschaltet wird.

Die Funktion der erfindungsgemäßen Einrichtung wird nachstehend näher erläutert.

Es wird angenommen, daß die Farbspritzanlage in Betrieb genommen und zu diesem Zweck vom Farbdruckgeber 18 ein bestimmter Steuerdruck ausgesteuert wird. Die vom Farbdruckgeber 18 ausgesteuerte Druckluft gelangt über die Steuerleitung 19 und dem Druckmitteleingang 17 in die Ventileinlaßkammer 20. Durch das geöffnete Absperrventil 14, 16, 24, die Ventilauslaßkammer 15 und den Kanal 25 einerseits strömt die Druckluft in die zweite Druckmittelkammer 27 und beaufschlagt den Kolben 12 und durch den Kanal 11 sowie die als Filter ausgebildete Drossel 10 andererseits gelangt die Druckluft in die erste Druckmittelkammer 9, 7 und beaufschlagt die gegenüberliegende Seite des Kolbens 12. Die auf die beiden Kolbenflächen einwirkenden Drücke befinden sich im Gleichgewicht und halten so den mit dem Kolben 12 verbundenen Ventilverschlußkörper 14, 16 in der Offenstellung. Über den Druckmittelausgang 5 und die Steuerleitung 4 gelangt die Druckluft aus der ersten Druckmittelkammer 7, 9 auf den Steuereingang des Farbdrucksteuerventils 2, wodurch die über die Leitung 3 unter Druck aufzubringende Farbmenge gesteuert wird.

Tritt der Fall ein, daß beim Farbdrucksteuerventil 2 die Membran, welche die Arbeitskammer von der Steuerkammer trennt, reißt, so wird die unter relativ hohem Druck stehende Farbe in die Steuerleitung 4 und weiter über den Druckmittelausgang 5 in die erste Druckmittelkammer 7, 9 gedrückt. Da der Steuerdruck niedriger ist als der Druck des die Farbe transportierenden Druckmittels, baut sich in der ersten Druckmittelkammer 7, 9 ein Druck auf, der höher ist als der Druck in der zweiten Druckmittelkammer 27. Der Kolben 12 wird in Richtung auf die zweite Druckmittelkammer 27 zu verschoben. Dabei legt sich der konische Teil 16 des Ventilverschlußkörpers 14, 16 an den Ventilsitz 24 an. Das Absperrventil 14, 16, 24 ist jetzt geschlossen, so daß die unter relativ hohem Druck stehende Farbe möglicherweise noch durch die Drossel 10 und den Kanal 11 in die Ventilauslaßkammer 15 gelangen kann, jedoch nicht in die Ventileinlaßkammer 20 und über den Druckmitteleingang 17 und die Steuerleitung 19 weiter zum Farbdruckgeber 18.

Da die Wirkfläche des Kolbens 12, welche die zweite Druckmittelkammer 27 begrenzt, bei geschlossenem Absperrventils 14, 16, 24 um den Betrag der Stirnfläche des als Ventilverschlußkörper 14, 16 dienenden Fortsatzes des Kolbens 12 verringert ist, kann das Absperrventil 14, 16, 24 auch nicht ungewollt in die Offenstellung gebracht werden, wenn über den Kanal 25 die unter hohem Druck stehende Farbe in die zweite Druckmittelkammer 27 gelangen sollte.

Da bei der Verschiebung des Kolbens 12 in Richtung auf die zweite Druckmittelkammer 27 zu der Schaltstift 22 vom Ventilverschlußkörper 14, 16 ein Stück aus dem Gehäuseteil 28 herausgeschoben worden ist, kann die Bedienungsperson der Farbspritzanlage den Defekt in der Anlage schnell erkennen.

Es ist selbstverständlich auch möglich, den Schaltstift 22 mit elektrisch leitenden Kontakten zu versehen, welche mit einer optischen oder/und akustischen Warneinrichtung in Verbindung stehen.

Anstelle eines die beiden Kammern 7, 9 und 27 trennenden, verschiebbar angeordneten Kolbens 12 kann auch ein Membrankolben vorgesehen werden.

Die erfindungsgemäßen Einrichtung kann überall dort eingesetzt werden, wo ein Medium höheren Druckes mittels einer mit niedrigerem Druck betriebenen Steuereinrichtung gesteuert wird.

**Patentansprüche**

1. Steuereinrichtung für ein druckmittelgesteuertes, in einer Versorgungsleitung (1) angeordnetes Ventil (2), wobei der Steuerdruckmittelanschluß der Ventilbetätigung über eine Steuerleitung (4, 19) mit einer Steuerdruckquelle (18) eines von der Versorgungsleitung getrennten Steuerkreises, insbesondere eines Steuerkreises mit einem gegenüber dem Druck in der Versorgungsleitung (1) niedrigeren Druck, verbunden ist, gekennzeichnet durch die folgenden Merkmale:

a) in der Steuerleitung ist ein bei normalem Betrieb offenes Absperrventil (14, 16, 24) angeordnet, welches einen Druckmitteleingang (17) und einen Druckmittelausgang (5) für den Steuerdruck aufweist;

b) der Druckmitteleingang (17) ist mit dem Druckmittelausgang (5) über das Absperrventil (14, 16, 24) und eine Drossel (10) verbunden;

c) parallel zu der Drossel (10) ist eine Differenzdruck-Meßeinrichtung (12, 9, 7, 27) angeordnet, welche die Betätigung des Absperrventils (14, 16, 24) steuert;

d) die Differenzdruck-Meßeinrichtung (12, 9, 7, 27) ist so aufgebaut, daß das Absperrventil (14, 16, 24) geschlossen wird, wenn der der Differenzdruck-Meßeinrichtung (12, 9, 7, 27) vom Druckmittelausgang (5) zugeführte Druck größer ist als der der Differenzdruck-Meßeinrichtung (12, 9, 7, 27) von der anderen Seite der Drossel (10) zugeführte Druck.

2. Einrichtung nach Anspruch 1, gekennzeichnet durch die folgenden Merkmale:

a) die Differenzdruck-Meßeinrichtung weist einen Differentialzylinder auf, welcher einen Kolben (12), der eine erste Druckmittelkammer (9, 7) von einer zweiten Druckmittelkammer (27) trennt enthält;

b) die erste Druckmittelkammer (9, 7) ist direkt mit dem Druckmittelausgang (5) verbunden;

c) die erste Druckmittelkammer (9, 7) steht über die Drossel (10), einen ersten Kanal (11) und das Absperrventil (14, 16, 24) mit dem Druckmitteleingang (17) in Verbindung;

d) die zweite Druckmittelkammer (27) ist mit dem ersten Kanal (11) verbunden;

e) die zweite Druckmittelkammer (27) ist über das Absperrventil (14, 16, 24) mit dem Druckmitteleingang (17) verbindbar.

3. Einrichtung nach Anspruch 1, gekennzeichnet durch die folgenden Merkmale:

a) die Differenzdruck-Meßeinrichtung weist einen Differentialzylinder auf, welcher einen Kolben (12), der eine erste Druckmittelkammer (9, 7) von einer zweiten Druckmittelkammer (27) trennt enthält;

b) die erste Druckmittelkammer (9, 7) ist direkt mit dem Druckmittelausgang (5) verbunden;

c) die erste Druckmittelkammer (9, 7) steht über die Drossel (10), einen ersten Kanal (11) und das Absperrventil (14, 16, 24) mit dem Druckmitteleingang (17) in Verbindung;

d) die zweite Druckmittelkammer (27) ist mit dem Druckmitteleingang (17) direkt verbunden.

4. Einrichtung nach Anspruch 1, gekennzeichnet durch die folgenden Merkmale:

a) die Absperrventil weist einen Ventilsitz (24) auf, welcher zwischen einer Ventileinlaßkammer (20) und einer Ventilauslaßkammer (15) angeordnet ist;

b) die Ventileinlaßkammer (20) ist mit dem Druckmitteleingang (17) verbunden;

c) die Ventilauslaßkammer (15) steht über den ersten Kanal (11) und die Drossel (10) mit der ersten Druckmittelkammer (9, 7) in Verbindung;

d) die Ventilauslaßkammer (15) ist über einen zweiten Kanal (25) mit der zweiten Druckmittelkammer (27) verbunden;

e) an der die zweite Druckmittelkammer (27) begrenzenden Seite des Kolbens (12) ist ein als Ventilverschlußkörper (14, 16) dienender Fortsatz angeordnet, welcher durch eine die Ventilauslaßkammer (15) von der zweiten Druckmittelkammer (27) trennende, als Gehäusesteg (26) ausgebildete Wand hindurchgeführt ist.

5. Einrichtung nach wenigstens einem der vorhergehenden Ansprüche, dadurch gekennzeichnet, daß die Drossel (10) als Filter ausgebildet ist.

6. Einrichtung nach wenigstens einem der vorhergehenden Ansprüche, dadurch gekennzeichnet, daß eine mit dem Absperrventil (14, 16, 24) zusammenwirkende Warneinrichtung vorgesehen ist, welche bei einer Schließbewegung des Absperrventils (14, 16, 24) betätigt wird.

7. Einrichtung nach Anspruch 6, dadurch gekennzeichnet, daß die Warneinrichtung aus einem Schaltstift (22) besteht, welcher bei einer Schließbewegung des Ventilverschlußkörpers (14, 16) von diesem gegen die Kraft einer Feder (30) verschiebbar ist.

8. Einrichtung nach Anspruch 7, dadurch gekennzeichnet, daß der Schaltstift (22) als optische Anzeigeeinrichtung ausgebildet ist.

9. Einrichtung nach Anspruch 7, dadurch gekennzeichnet, daß der Schaltstift (22) elektrische oder pneumatische Kontakte für eine Warneinrichtung aufweist.

10. Einrichtung nach Anspruch 2, gekennzeichnet durch die folgenden Merkmale:

a) die zweite Druckmittelkammer (27) ist druckdicht von der ersten Druckmittelkammer (9, 7) getrennt angeordnet;

b) die zweite Druckmittelkammer (27) ist über eine das Absperrventil umgehende Leitung mit der Steuerdruckquelle (18) verbunden;

c) es sind Mittel vorgesehen, über welche der Kolben (12) mit dem Absperrventil in Wirkverbindung bringbar ist.

11. Einrichtung nach Anspruch 10, gekennzeichnet durch die folgenden Merkmale:

a) die Mittel zur Betätigung des Absperrventils bestehen aus einem Stößel, der an der die zweite Druckmittelkammer (27) begrenzenden Seite des Kolbens (12) angeordnet ist;

b) der Stößel ist druckdicht aus der zweiten Druckmittelkammer (27) herausgeführt.

12. Einrichtung nach Anspruch 10, dadurch gekennzeichnet, daß die Mittel zur Betätigung des Absperrventils aus elektrischen Kontakten bestehen, welche sowohl am Kolben (12) als auch in der zweiten Druckmittelkammer (27) angeordnet sind und bei einer Verschiebebewegung des Kolbens (12) in Richtung auf die zweite Druckmittelkammer (27) zu das Absperrventil schaltet.

**Revendications**

1. Dispositif de commande pour un robinet (2) intercalé dans une canalisation d'alimentation (1), le raccord de fluide sous pression de commande de la manoeuvre du robinet étant en communication, par une canalisation de commande (4, 19) avec une source de pression de commande (18) appartenant à un circuit de commande séparé de la canalisation d'alimentation, en particulier à un circuit de commande possédant une pression inférieure à la pression qui règne dans la canalisation d'alimentation (1), caractérisé par les particularités suivantes:

a) dans la canalisation de commande, est interposée une soupape d'arrêt (14, 16, 24) qui est ouverte en fonctionnement normal et qui présente une entrée de fluide sous pression (17) et une sortie de fluide sous pression (5) pour la pression de commande;

b) l'entrée de fluide sous pression (17) est reliée à la sortie de fluide sous pression (5) à travers la soupape d'arrêt (14, 16, 24) et un étranglement (10);

c) en parallèle avec l'étranglement (10), est agencé un dispositif de mesure de la pression différentielle (12, 9, 7, 27) qui commande la manoeuvre de la soupape d'arrêt (14, 16, 24);

d) le dispositif de mesure de la pression différentielle (12, 9, 7, 27) est construit de manière que la soupape d'arrêt (14, 16, 24) soit fermée lorsque la pression transmise au dispositif de mesure de la pression différentielle (12, 9, 7, 27) en provenance de la sortie de fluide sous pression (5) est plus grande que la pression transmise au dispositif de mesure de pression différentielle (12, 9, 7, 27) en provenance de l'autre côté de l'étranglement (10).

2. Dispositif selon la revendication 1, caractérisé par les particularités suivantes:

a) le dispositif de mesure de pression différentielle comprend un cylindre différentiel qui renferme un piston (12) qui sépare une première chambre de fluide sous pression (9, 7) d'une deuxième chambre de fluide sous pression (27);

b) la première chambre de fluide sous pression (9, 7) est en communication directe avec la sortie de fluide sous pression (5);

c) la première chambre de fluide sous pression (9, 7) est en communication avec l'entrée de fluide sous pression (17) par l'intermédiaire de l'étranglement (10), d'un premier canal (11) et de la soupape d'arrêt (14, 16, 24);

d) la deuxième chambre de fluide sous pression (27) est en communication avec le premier canal (11);

e) la deuxième chambre de fluide sous pression (27) peut être mise en communication avec l'entrée de fluide sous pression (17) par l'intermédiaire de la soupape d'arrêt (14, 16, 24).

3. Dispositif selon la revendication 1, caractérisé par les particularités suivantes:

a) le dispositif de mesure de pression différentielle comprend un cylindre différentiel qui renferme un piston (12) qui sépare une première chambre de fluide sous pression (9, 7) d'une deuxième chambre de fluide sous pression (27);

b) la première chambre de fluide sous pression (9, 7) est en communication directe avec la sortie de fluide sous pression (5);

c) la première chambre de fluide sous pression (9, 7) est en communication avec l'entrée de fluide sous pression (17) par l'intermédiaire d'un étranglement (10), d'un premier canal (11) et de la soupape d'arrêt (14, 16, 24);

d) la deuxième chambre de fluide sous pression (27) est en communication directe avec l'entrée de fluide sous pression (17).

4. Dispositif selon la revendication 1, caractérisé par les particularités suivantes:

a) la soupape d'arrêt présente un siège de soupape (24) qui est disposé entre une chambre d'entrée (20) de la soupape et une chambre de sortie (15) de la soupape;

b) la chambre d'entrée (20) de la soupape est en communication avec l'entrée de fluide sous pression (17);

c) la chambre de sortie (15) de la soupape est en communication avec la première chambre de fluide sous pression (9, 7) par l'intermédiaire du premier canal (11) et de l'étranglement (10);

d) la chambre de sortie (15) de la soupape est en communication avec la deuxième chambre de fluide sous pression (27) par l'intermédiaire d'un deuxième canal (25);

e) sur la face du piston (12) qui délimite la deuxième chambre de fluide sous pression (27) est prévu un prolongement qui sert d'élément obturateur de soupape (14, 16) et qui passe à travers une paroi, formant un voile (26) du boîtier, qui sépare la chambre de sortie (15) de la deuxième chambre de fluide sous pression (27).

5. Dispositif selon au moins l'une des revendications précédentes, caractérisé en ce que l'étranglement (10) est réalisé sous la forme d'un filtre.

6. Dispositif selon au moins l'une des revendications précédentes, caractérisé en ce qu'il est prévu un dispositif avertisseur coopérant avec la soupape d'arrêt (14, 16, 24), qui est actionné lors d'un mouvement de fermeture de la soupape d'arrêt (14, 16, 24).

7. Dispositif selon la revendication 6, caractérisé en ce que le dispositif avertisseur est constitué par une tige (22) qui, en réponse à un mouvement de fermeture de l'élément obturateur (14, 16) de la soupape, peut être déplacée en translation par cet élément obturateur à l'encontre de la force d'un ressort (30).

8. Dispositif selon la revendication 7, caractérisé en ce que la tige (22) est réalisée sous la forme d'un dispositif indicateur automatique.

9. Dispositif selon la revendication 7, caractérisé en ce que la tige (22) présente des contacts électriques ou pneumatiques agissant sur un dispositif avertisseur.

10. Dispositif selon la revendication 2, caractérisé par les particularités suivantes:

a) la deuxième chambre de fluide sous pression (27) est séparée à joint étanche à la pression de la première chambre de fluide sous pression (9, 7);

b) la deuxième chambre de fluide sous pression (27) est en communication avec la source de pression de commande (18) par l'intermédiaire d'une canalisation qui contourne la soupape d'arrêt;

c) il est prévu des moyens par lesquels le piston (12) peut être mis en communication active avec la soupape d'arrêt.

11. Dispositif selon la revendication 10, caractérisé par les particularités suivantes:

a) les moyens servant à actionner la soupape d'arrêt sont constitués par un poussoir qui est monté sur la deuxième face du piston (12) qui délimite la deuxième chambre de fluide sous pression (27);

b) le poussoir émerge de la deuxième chambre de fluide sous pression (27) à travers un joint étanche à la pression.

12. Dispositif selon la revendication 10, caractérisé en ce que les moyens servant à la commande de la soupape d'arrêt sont constitués par des contacts électriques, qui sont agencés aussi bien sur le piston (12) que dans la deuxième chambre de fluide sous pression (27), et que la soupape d'arrêt manoeuvre dans un mouvement de translation du piston (12) dirigé vers la deuxième chambre de fluide sous pression (27).

**Claims**

1. Control device for a pressure-medium controlled valve (2) arranged in a supply line (1), the control pressure medium connection for actuating the valve being connected by way of a control line (4, 19) to a control pressure source (18) of a control circuit that is separate from the supply line, especially of a control circuit having a pressure that is lower than the pressure in the supply line (1), characterised by the following features:

a) in the control line there is arranged a shut-off valve (14, 16, 24) which is open during normal operation and which has a pressure-medium inlet (17) and a pressure-medium outlet (5) for the control pressure;

b) the pressure-medium inlet (17) is connected to the pressure-medium outlet (5) by way of the shut-off valve (14, 16, 24) and a throttle (10),

c) parallel to the throttle (10) is arranged a differential pressure measuring device (12, 9, 7, 27) which controls the actuation of the shut-off valve (14, 16, 24);

d) the differential pressure measuring device (12, 9, 7, 27) is so constructed that the shut-off valve (14, 16, 24) is closed when the pressure supplied to the differential pressure measuring device (12, 9, 7, 27) from the pressure medium outlet (5) is greater than the pressure supplied to the differential pressure measuring device (12, 9, 7, 27) from the other side of the throttle (10).

2. Device according to claim 1, characterised by the following features:

a) the differential pressure measuring device has a differential cylinder which contains a piston (12) which separates a first pressure-medium chamber (9, 7) from a second pressure-medium chamber (27);

b) the first pressure-medium chamber (9, 7) is connected directly to the pressure-medium outlet (5);

c) the first pressure-medium chamber (9, 7) is connected via the throttle (10), a first channel (11) and the shut-off valve (14, 16, 24) to the pressure-medium inlet (17),

d) the second pressure-medium chamber (27) is connected to the first channel (11),

e) the second pressure-medium chamber (27) can be connected by way of the shut-off valve (14, 16, 24) to the pressure-medium inlet (17).

3. Device according to claim 1, characterised by the following features:

a) the differential pressure measuring device has a differential cylinder which contains a piston (12) that separates a first pressure-medium chamber (9, 7) from a second pressure-medium chamber (27);

b) the first pressure-medium chamber (9, 7) is connected directly to the pressure-medium outlet (5);

c) the first pressure-medium chamber (9, 7) is connected via the throttle (10), a first channel (11) and the shut-off valve (14, 16, 24) to the pressure-medium inlet (17);

d) the second pressure-medium chamber (27) is connected directly to the pressure-medium input (17).

4. Device according to claim 1, characterised by the following features:

a) the shut-off valve has a valve seat (24) which is arranged between a valve inlet chamber (20) and a valve outlet chamber (15);

b) the valve inlet chamber (20) is connected to the pressure-medium inlet (17);

c) the valve outlet chamber (15) is connected by way of the first channel (11) and the throttle (10) to the first pressure-medium chamber (9, 7),

d) the valve outlet chamber (15) is connected by way of a second channel (25) to the second pressure-medium chamber (27);

e) at the side of the piston (12) that bounds the second pressure-medium chamber (27) there is arranged a projection acting as the valve-closure member (14, 16) which is passed through a wall forming part of the housing (26) that separates the valve outlet chamber (15) from the second pressure-medium chamber (27).

5. Device according to at least one of the preceding claims, characterised in that the throttle (10) is designed as a filter.

6. Device according to at least one of the preceding claims, characterised in that a warning device that cooperates with the shut-off valve (14, 16, 24) and which is actuated during a closing movement of the shut-off valve (14, 16, 24) is provided.

7. Device according to claim 6, characterised in that the warning device consists of a switching pin (22) which can be displaced by the closing member (14, 16) of the valve, during the closing movement of the latter, against the force of a spring (30).

8. Device according to claim 7, characterised in that the switching pin (22) is designed as an optical indicator.

9. Device according to claim 7, characterised in that the switching pin (22) has electrical or pneumatic contacts for a warning device.

10. Device according to claim 2, characterised by the following features:

a) the second pressure-medium chamber (27) is separated in a pressure-tight manner from the first pressure-medium chamber (9, 7);

b) the second pressure-medium chamber (27) is connected to the source of control pressure (18) by way of a line that by-passes the shut-off valve;

c) means are provided by way of which the piston (12) can be caused to operate the shut-off valve.

11. Device according to claim 10, characterised by the following features:

a) the means for actuating the shut-off valve consist of a push rod which is arranged on the side of the piston (12) that bounds the second pressure-medium chamber (27);

b) the push rod passes out of the second pressure-medium chamber (27) in a pressure-tight manner.

12. Device according to claim 10, characterised in that the means for actuating the shut-off valve consist of electrical contacts which are arranged both on the piston (12) and in the second pressure-medium chamber (27) and switch the shut-off valve during a movement of the piston (12) in the direction towards the second pressure-medium chamber (27).